# EUROPÄISCHE PATENTSCHRIFT

(11) **EP 2 497 225 B1**
(45) Veröffentlichungstag und Bekanntmachung des Hinweises auf die Patenterteilung: **24.07.2013**
(21) Anmeldenummer: 10778618.8
(22) Anmeldetag: 05.11.2010
(51) Int. Cl.: H04L 12/10, H04L 12/40

(54) **SPANNUNGSVERSORGUNGSANORDNUNG FÜR EIN ENDGERÄT MIT ETHERNET-ENERGIEVERSORGUNG**
POWER SUPPLY ASSEMBLY FOR A TERMINAL HAVING ETHERNET ENERGY SUPPLY
INSTALLATION D'ALIMENTATION EN TENSION POUR UN TERMINAL AVEC ALIMENTATION EN ÉNERGIE PAR ETHERNET

(30) Priorität: 06.11.2009 DE 102009052157
(43) Veröffentlichungstag der Anmeldung: 12.09.2012
(73) Patentinhaber: Fujitsu Technology Solutions Intellectual Property GmbH, 80807 München (DE)
(72) Erfinder: HÄUßERMANN, Rudolf, 86150 Augsburg (DE); LINNE, Johannes, 86447 Todtenweiß (DE)
(74) Vertreter: Epping - Hermann - Fischer
(86) Internationale Anmeldenummer: PCT/EP2010/066943
(87) Internationale Veröffentlichungsnummer: WO 2011/054941

(56) Entgegenhaltungen:
- EP-A1- 1 942 600
- US-A1- 2008 250 255
- US-A1- 2008 290 729

## Beschreibung

Die Erfindung betrifft eine Spannungsversorgungsanordnung für ein Endgerät mit Ethernet-Energieversorgung.

Derzeit gibt es Bestrebungen, Geräte, die an ein Datennetz angeschlossen sind, über dieses auch mit Energie zu versorgen. Ein hierfür gebräuchlicher Standard ist beispielsweise der IEEE 802.3 af für das so genannte Power over Ethernet. Bei Power over Ethernet werden netzwerkfähige Geräte über das acht-adrige Ethernet-Kabel mit Energie versorgt. Ein Vorteil von Power over Ethernet ist, dass bei dem Gerät ein Stromversorgungskabel eingespart werden kann.

Um ein Endgerät um Power over Ethernet-Funktionalität zu erweitern, wird üblicherweise ein so genannter Splitter in ein herkömmliches ethernetfähiges Endgerät eingebaut. Dieser Splitter trennt die über das Ethernet-Kabel bereitgestellte Energie von den Daten. Der Splitter erzeugt also eine Gleichspannung und stellt das Ethernet-Signal zur Verfügung. Die Gleichspannung liegt dabei gemäß Standard in einem Bereich von 50 V. Folglich muss diese Gleichspannung anschießend noch in eine für Endgeräte typischerweise gebräuchliche Versorgungsspannung von beispielsweise 3 bis 12 V gewandelt werden. Dies erhöht die Komplexität, Kosten, die Fehleranfälligkeit, das Gewicht sowie den Flächen- und den Raumbedarf der Spannungsversorgung im Endgerät.

Das Dokument EP 1942600 A1 beschreibt eine Vorrichtung und ein Verfahren zur Verwaltung der Energieverteilung über Ethernet.

Das Dokument US 2008/250255 A1 zeigt ein System und ein Verfahren zur Anwendung von POE in tragbaren Rechnern.

Eine zu lösende Aufgabe ist es daher, eine Spannungsversorgung für Endgeräte mit Ethernet-Energieversorgung weiter zu verbessern.

Die Aufgabe wird gelöst durch den Gegenstand des Patentanspruchs 1. Weiterbildungen und Ausgestaltungen sind jeweils Gegenstände der abhängigen Ansprüche.

In einer Ausführungsform weist eine Spannungsversorgungsanordnung für ein Endgerät mit Ethernetenergieversorgung eine Spliteinrichtung, eine mit der Spliteinrichtung gekoppelte Logikeinheit und einen mit der Logikeinheit gekoppelten DC/DC-Wandler auf. Die Spliteinrichtung umfasst einen Ethernet-Energieversorgungsanschluss zum Verbinden mit einem Ethernet-Kabel, das zur Energieversorgung eingerichtet ist und einen Ausgang zum Bereitstellen einer ersten Gleichspannung. Der DC/DC-Wandler ist zudem schaltbar mit dem Ausgang der Spliteinrichtung verbunden. Des Weiteren weist die Spannungsversorgungsanordnung ein mit der Logikeinheit gekoppeltes Netzteil auf. Das Netzteil umfasst einen Ausgang zum Bereitstellen einer zweiten Gleichspannung. Dieser Ausgang ist schaltbar mit dem DC/DC-Wandler verbunden. An einem Ausgang des DC/DC-Wandlers ist gesteuert von der Logikeinheit eine Spannung zur Versorgung des Endgeräts bereitgestellt.

Über das Ethernet-Kabel wird dem Endgerät Energie zugeführt, die von der Spliteinrichtung als erste Gleichspannung bereitgestellt wird. Gesteuert von der Logikeinheit wird dem DC/DC-Wandler jeweils über eine schaltbare Verbindung die von der Spliteinrichtung bereitgestellte erste Gleichspannung oder die von dem Netzteil bereitgestellte zweite Gleichspannung zugeführt. Der DC/DC-Wandler erzeugt daraus die Spannung für das Endgerät.

Aufgrund der Anordnung mit der gemeinsamen Steuerung der Spliteinrichtung und des DC/DC-Wandlers wird die Spannungsversorgung für das Endgerät optimiert. Die Arbeitsweise von DC/DC-Wandler und Spliteinrichtung werden aufeinander abgestimmt, sodass eine geringere Ausfallrate, also eine höhere mittlere Betriebsdauer zwischen Ausfällen, Meantime between Failure, MTBF, erreicht wird. Durch die Integration der beiden parallel im Endgerät vorhandenen Energieversorgungen, nämlich des Netzteils und der Spliteinrichtung mit Hilfe der Logikeinheit und des nur einen DC/DC-Wandlers wird mit Vorteil eine Reduktion der Komplexität der Spannungsversorgung sowie deren Flächen- und Raumbedarf erreicht. Dadurch, dass nur ein DC/DC-Wandler eingesetzt wird, ist es lediglich erforderlich, diesen einen DC/DC-Wandler mit einer Stabilisierung sowie mit einer Temperatur- und Alterungskompensation zu versehen.

Die Spliteinrichtung wird auch als Splitter im Sinne des Power over Ethernet-Standards bezeichnet. Sie erfüllt somit auch weitere im Standard vorgesehene Funktionen, wie beispielsweise die Signalisierung und Aushandlung der Leistungsklasse mit einer Power over Ethernet-Infrastruktur.

Das Netzteil umfasst beispielsweise ein in einem Endgerät bereits vorhandenes Netzteil eines Monitors, dem eine Wechselspannung im Bereich von 110V beziehungsweise 220 V zugeführt ist. Die von der Spliteinrichtung üblicherweise bereitgestellte erste Gleichspannung liegt beispielsweise in der Größenordnung von 50 V. Die von dem Netzteil typischerweise bereitgestellte zweite Gleichspannung liegt beispielsweise im Bereich von 100 bis 200 V. Der DC/DC-Wandler ist demzufolge so ausgestaltet, dass er einen Eingangsspannungsbereich von beispielsweise 50 bis 200 V abdeckt.

In einer weiteren Ausführungsform ist die Spannungsversorgungsanordnung gesteuert von der Logikeinheit in Funktion eines jeweiligen Werts der ersten und zweiten Gleichspannung zum Betrieb in einer ersten und in einer zweiten Betriebsart ausgelegt.

Die erste und die zweite Gleichspannung werden der Logikeinheit zugeführt. Abhängig vom jeweiligen Wert der bereitgestellten ersten und zweiten Gleichspannung steuert die Logikeinheit die Spannungsversorgungsanordnung in die erste oder in die zweite Betriebsart.

In einer Weiterbildung ist dem DC/DC-Wandler in der ersten Betriebsart die erste Gleichspannung zugeführt und die Spannung ist in Abhängigkeit der ersten Gleichspannung bereitgestellt. In der zweiten Betriebsart ist dem DC/DC-Wandler die zweite Gleichspannung zugeführt und die Spannung ist in Abhängigkeit der zweiten Gleichspannung bereitgestellt.

In der ersten Betriebsart ist die schaltbare Verbindung zwischen Spliteinrichtung und DC/DC-Wandler gesteuert von der Logikeinheit geschlossen, sodass das Endgerät über die Spliteinrichtung, also über Power over Ethernet mit Energie versorgt wird. Der DC/DC-Wandler wandelt die erste Gleichspannung in die Spannung für das Endgerät um. In der zweiten Betriebsart ist gesteuert von der Logikeinheit die schaltbare Verbindung zwischen Netzteil und DC/DC-Wandler geschlossen. Folglich wird das Endgerät über das Netzteil mit Energie gespeist. Der DC/DC-Wandler generiert aus der zweiten Gleichspannung die Spannung für das Endgerät.

Vorteilhafterweise ist über die Wahl der Betriebsart einstellbar, ob das Endgerät über das Netzteil oder über die Spliteinrichtung gespeist wird. Die kombinierte Ansteuerung des Netzteils und der Spliteinrichtung über die Logikeinheit ermöglicht eine Optimierung eines so genannten Powermanagements. Die in der Logikeinheit zu realisierende Steuerfunktion wird erheblich vereinfacht, weil nur ein DC/DC-Wandler anzusteuern ist. Des Weiteren wird in der zweiten Betriebsart, also bei Speisung des Endgeräts über das Netzteil ermöglicht, die Energieeinspeisung über die Spliteinrichtung abzuschalten und somit die Infrastruktur, beispielsweise einen Power over Ethernet-Injector, zu entlasten.

In einer weiteren Ausführungsform sind jeweils eine galvanische Trennung zwischen Spliteinrichtung und DC/DC-Wandler und eine weitere galvanische Trennung zwischen Netzteil und DC/DC-Wandler vorgesehen.

In einer Weiterbildung weist die Logikeinheit einen Spannungsvergleicher auf.

Der Spannungsvergleicher vergleicht die zugeführte erste oder die zugeführte zweite Gleichspannung mit einer Mindestspannung. Das Vergleichsergebnis wird zur Auswahl der Betriebsart herangezogen.

In einer weiteren Ausführungsform weist die Spannungsversorgungsanordnung einen Energiespeicher auf. Dieser ist schaltbar zwischen Spliteinrichtung und DC/DC-Wandler gekoppelt. Der Energiespeicher wird aufgeladen in Phasen, in denen das Endgerät weniger Energie benötigt, als über das Ethernet-Kabel zugeführt wird. In Phasen, in denen das Endgerät mehr Energie benötigt, als über das Ethernet-Kabel zugeführt wird, stellt der Energiespeicher zusätzliche Energie zur Verfügung.

Der Energiespeicher fungiert somit vorteilhafterweise als Puffer und ermöglicht eine effizientere Nutzung der im IEEE-Standard 802.3 af definierten Verbrauchsklassen.

In einer Weiterbildung ist die Spannungsversorgungsanordnung gesteuert von der Logikeinheit zum Betrieb in einer dritten und in einer vierten Betriebsart ausgelegt.

In einer weiteren Ausführungsform ist in der dritten Betriebsart der Energiespeicher zum Aufladen mit der ersten Gleichspannung mit dem Ausgang der Spliteinrichtung verbunden. In der vierten Betriebsart ist der Energiespeicher zum Bereitstellen einer Zusatzspannung mit dem Eingang des DC/DC-Wandlers verbunden.

Sobald die Logikeinheit erkennt, dass das Endgerät weniger Energie als über das Ethernet-Kabel bereitgestellt wird benötigt, steuert sie die Spannungsversorgungsanordnung in die dritte Betriebsart. Der Energiespeicher wird aufgeladen. Erkennt die Logikeinheit andererseits, dass das Endgerät mehr Energie als über das Ethernet-Kabel zuführbar ist benötigt wird, so steuert sie die Spannungsversorgungsanordnung in die vierte Betriebsart. Folglich stellt der Energiespeicher die Zusatzspannung bereit, die dem DC/DC-Wandler zusätzlich zur ersten Gleichspannung zugeführt wird.

Somit ist es möglich, flexibel auf den über die Betriebsdauer unterschiedlichen Energiebedarf eines Endgeräts zu reagieren.

Der Energiespeicher ist dabei beispielsweise als Akku, insbesondere als Lithium-Polymer-Akku realisiert.

In einer Weiterbildung ist an einem Ausgang der Logikeinheit ein Statussignal in Abhängigkeit der Spannung bereitgestellt.

Das Statussignal umfasst beispielsweise die Information, dass die Spannungsversorgungsanordnung in Betrieb ist, oder die Anzeige der gerade aktiven Betriebsart.

Die Erfindung wird nachfolgend an Ausführungsbeispielen anhand der Figuren näher erläutert. Funktions- beziehungsweise wirkungsgleiche Funktionselemente tragen gleiche Bezugszeichen. Insoweit sich Elemente in ihrer Funktion entsprechen, wird deren Beschreibung nicht in jeder der folgenden Figuren wiederholt. Es zeigen:
- Figur 1: eine beispielhafte Ausführungsform einer Spannungsversorgungsanordnung für ein Endgerät mit Ethernet-Energieversorgung nach dem vorgeschlagenen Prinzip,
- Figur 2: eine weitere beispielhafte Ausführungsform einer Spannungsversorgungsanordnung nach dem vorgeschlagenen Prinzip und
- Figur 3: eine Ausführungsbeispiel zum Bereitstellen der ersten und zweiten Gleichspannung.

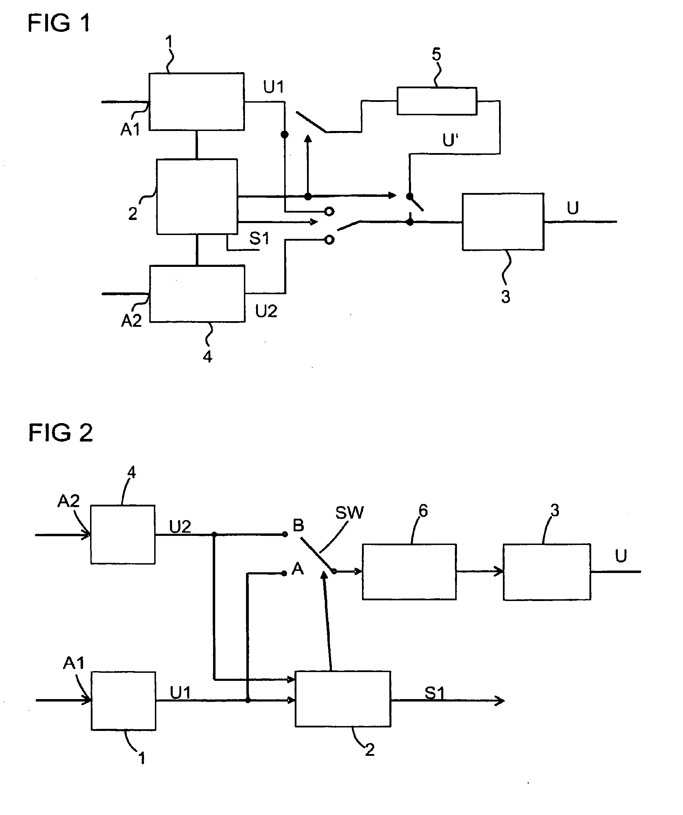

Figur 1 zeigt eine beispielhafte Ausführungsform einer Spannungsversorgungsanordnung nach dem vorgeschlagenen Prinzip. Die Anordnung umfasst eine Spliteinrichtung 1, eine Logikeinheit 2, einen DC/DC-Wandler 3 und ein Netzteil 4. Die Spliteinrichtung 1 weist einen Energieversorgungsanschluss A1 zum Verbinden mit einem Ethernet-Kabel auf. Das Ethernet-Kabel ist zur Energieversorgung über eine Power over Ethernet-Infrastruktur eingerichtet. Am Ausgang der Spliteinrichtung 1 ist eine erste Gleichspannung U1 bereitgestellt. Die Logikeinheit 2 ist mit der Spliteinrichtung 1, dem DC/DC-Wandler 3 und dem Netzteil 4 gekoppelt. Das Netzteil 4 weist einen Anschluss A2 zum Verbinden mit einem 110 beziehungsweise 220 V Wechselstromnetz auf. An einem Ausgang des Netzteils 4 ist eine zweite Gleichspannung U2 bereitgestellt. Die erste Gleichspannung U1 und die zweite Gleichspannung U2 sind jeweils über eine schaltbare Verbindung einem Eingang des DC/DC-Wandlers 3 zugeführt. Die schaltbaren Verbindungen werden jeweils von der Logikeinheit 2 gesteuert. An einem Ausgang des DC/DC-Wandlers 3 ist eine Spannung U für das Endgerät bereitgestellt.

Die Logikeinheit 2 steuert den Betrieb der Spannungsversorgungsanordnung in einer ersten oder in einer zweiten Betriebsart. In der ersten Betriebsart ist die schaltbare Verbindung zwischen Spliteinrichtung 1 und DC/DC-Wandler 3 geschlossen, sodass dem Eingang des DC/DC-Wandlers die erste Gleichspannung U1 zugeführt ist. Der DC/DC-Wandler 3 generiert aus der ersten Gleichspannung U1 die Spannung U für das Endgerät. In der zweiten Betriebsart ist gesteuert von der Logikeinheit 2 die schaltbare Verbindung zwischen Netzteil 4 und DC/DC-Wandler 3 geschlossen. Somit ist dem DC/DC-Wandler 3 die zweite Gleichspannung U2 zugeführt, woraus der DC/DC-Wandler 3 die Spannung U generiert.

Die erste Gleichspannung U1 liegt beispielsweise im Bereich von 50 V. Die zweite Gleichspannung U2 liegt beispielsweise im Bereich von 100 bis 200 V. Die Spannung U ist beispielsweise im Bereich von 3 bis 12 V bereitgestellt.

Mit Vorteil ermöglicht die Integration von Spliteinrichtung 1 und Netzteil 4 gesteuert von der Logikeinheit 2 eine Realisierung mit dem genau einen DC/DC-Wandler 3. Durch die Wahl der ersten oder zweiten Betriebsart erhält die Spannungsversorgung eine größere Flexibilität. Zudem ist eine Optimierung der Power over Ethernet-Stromversorgung auch auf Seiten der Infrastruktur aufgrund der Auswertung des von der Logikeinheit 2 bereitgestellten Statussignals S1 und einer entsprechenden Signalisierung durch die Spliteinrichtung 1 möglich.

In einer Weiterbildung ist zusätzlich ein Energiespeicher 5 vorgesehen. Dieser ist gesteuert von der Logikeinheit 2 schaltbar einerseits mit dem Ausgang der Spliteinrichtung 1 und andererseits mit dem Eingang des DC/DC-Wandlers 3 gekoppelt. Der Energiespeicher 5 ist zum Bereitstellen einer Zusatzspannung U' eingerichtet. Diese Ausführung der Spannungsversorgungsanordnung ist ohne das Netzteil 4 realisiert.

Bei Einsatz des Energiespeichers 5 ist die Spannungsversorgungsanordnung gesteuert von der Logikeinheit 2 in einer dritten und in einer vierten Betriebsart betreibbar. In der dritten Betriebsart ist eine schaltbare Verbindung zwischen Energiespeicher 5 und Spliteinrichtung 1 geschlossen. Der Energiespeicher 5 wird somit mit der ersten Gleichspannung U1 aufgeladen. In der vierten Betriebsart ist die schaltbare Verbindung zwischen Energiespeicher 5 und DC/DC-Wandler 3 geschlossen. Die Zusatzspannung U' wird zusätzlich dem Eingang des DC/DC-Wandlers 3 zugeführt.

Bei den derzeit vorliegenden Power over Ethernet-Standards ist eine Obergrenze für die Gesamtleistungsaufnahme eines Endgeräts festgelegt. Je nach Standard wird bei der Initialisierung des Power over Ethernet-Endgeräts mit der Infrastruktur eine sich am Energieverbrauch des Endgeräts orientierende Verbrauchsklasse vereinbart. Der Energiebedarf eines Endgeräts kann allerdings insbesondere durch Einsatz von weiteren Peripheriegeräten variieren und sich folglich deutlich erhöhen.

Typischerweise werden über die Power over Ethernet-Infrastruktur beispielsweise 15 W geliefert. Benötigt das Endgerät weniger als diese beispielsweise 15 W, so steuert die Logikeinheit 2 das Endgerät in die dritte Betriebsart, bei der der Energiespeicher 5 mit der vom Endgerät nicht benötigten Energie aufgeladen wird.

Im gegensätzlichen Fall, in dem das Endgerät mehr Energie benötigt als über den Energieversorgungsanschluss A1 zugeführt wird, steuert die Logikeinheit 2 die Spannungsversorgungsanordnung in die vierte Betriebsart. Der Energiespeicher 5 gibt dann die Zusatzspannung U' ab.

Vorteilhafterweise können so einerseits kurzzeitige Spitzen beim Energiebedarf eines Endgeräts sowie der mittelfristige Betrieb eines Endgeräts mit Peripherie an einer Standard-Power over Ethernet-Infrastruktur realisiert werden.

Des Weiteren ist es möglich, gesteuert von der Logikeinheit 2 und auf Basis von Auswertung des Statussignals S1 eine entsprechende Signalisierung gegenüber der Power over Ethernet-Infrastruktur beispielsweise an einen so genannten Power-Injector zu realisieren, sodass auch netzseitig der Betrieb optimiert werden kann.

Figur 2 zeigt eine weitere Ausführungsform einer Spannungsversorgungsanordnung nach dem vorgeschlagenen Prinzip. Die hier gezeigte Ausführungsform weist zusätzlich zu derjenigen aus Figur 1 einen Schalter SW sowie eine Einheit zur galvanischen Trennung 6 auf. Die Einheit zur galvanischen Trennung 6 trennt den DC/DC-Wandler 3 galvanisch sowohl von der Spliteinrichtung 1 als auch von dem Netzteil 4. Der Schalter SW wird gesteuert von der Logikeinheit 2 und realisiert das Umschalten des Eingangs des DC/DC-Konverters 3 zwischen der ersten Gleichspannung U1 und der zweiten Gleichspannung U2. Ist der Schalter SW in der Stellung A, so befindet sich die Spannungsversorgungsanordnung in der ersten Betriebsart und wird über die Spliteinrichtung 1 und die erste Gleichspannung U1 gespeist. Ist der Schalter SW hingegen in der Position B, befindet sich die Spannungsversorgungsanordnung in der zweiten Betriebsart und wird über das Netzteil 4 und die zweite Gleichspannung U2 gespeist.

Das Netzteil 4 umfasst dabei mindestens einen Gleichrichter zum Umwandeln von Wechsel- in Gleichspannung. Die Spliteinrichtung 1 unterstützt beide Polaritäten der über das Ethernet-Kabel zugeführten Spannung. Der Schalter SW ist bevorzugt als Relais implementiert.

Die Logikeinheit 2 ist beispielsweise so konfiguriert, dass sie bei Vorhandensein der zweiten Gleichspannung U2 und sobald ein Wert der zweiten Gleichspannung U2 einen Mindestspannungswert überschreitet, die Spannungsversorgungsanordnung in die zweite Betriebsart schaltet. Dies entlastet vorteilhafterweise die Power over Ethernet-Infrastruktur.

Wenn entweder die erste Gleichspannung U1 oder die zweite Gleichspannung U2 gemäß ihrer jeweiligen Spezifikation bereitgestellt sind, zeigt das Statussignal S1 an, dass die Spannungsversorgungsanordnung funktioniert.

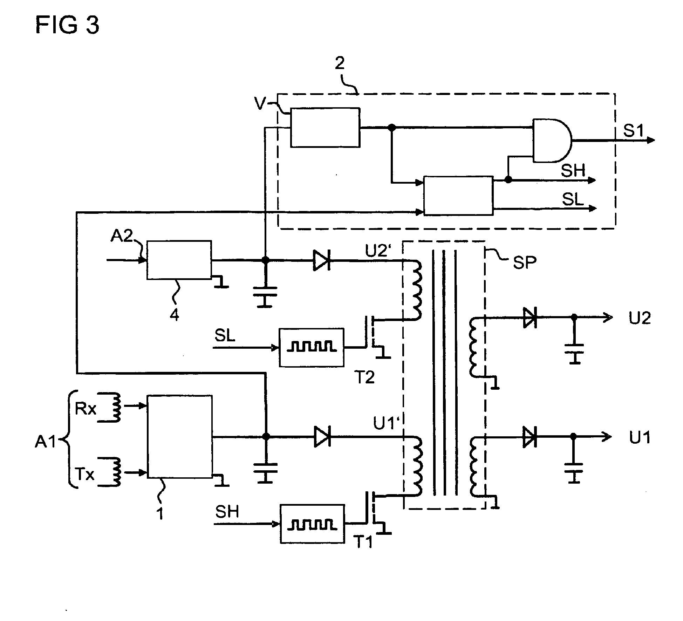

Figur 3 zeigt ein Ausführungsbeispiel zum Bereitstellen der ersten und zweiten Gleichspannung. Hier ist eine andere Art der galvanischen Entkopplung zwischen Energiezufuhr und Energiebereitstellung im Endgerät gezeigt. Die galvanische Trennung ist hier beispielhaft realisiert mit Hilfe eines Sperrwandlers SP. Die dem Energieversorgungsanschluss A1, hier ausgeführt als ein Adernpaar Rx, Tx eines Ethernet-Kabels, zugeführte Spannung wird in der Spliteinrichtung 1 in eine erste Hilfsspannung U1' gewandelt. Die dem zweiten Anschluss A2 zugeführte Wechselspannung wird im Netzteil 4 gleichgerichtet und als zweite Hilfsspannung U2' bereitgestellt.

Ein Spannungsvergleicher V der Logikeinheit 2 vergleicht die zugeführte zweite Hilfsspannung U2' mit einer Mindestspannung. Ist die zweite Hilfsspannung U2' größer als die Mindestspannung, so wird von der Logikeinheit 2 ein Signal SL erzeugt. Dadurch wird die zweite Hilfsspannung U2' gesteuert von einem Transistor T2 auf die Primärwindung des Sperrwandlers SP geschaltet. Am Ausgang des Sperrwandlers SP wird die zweite Gleichspannung U2 bereitgestellt. Das Endgerät befindet sich in der zweiten Betriebsart und wird somit über das Netzteil 4 gespeist.

Für den Fall, dass die zweite Hilfsspannung U2' kleiner als die Mindestspannung ist, erzeugt die Logikeinheit 2 ein Steuersignal SH. Infolgedessen wird ein Transistor T1 durchgeschaltet und die erste Hilfsspannung U1' auf die Primärwindung des Sperrwandlers SP geschaltet. Am Ausgang des Sperrwandlers SP wird die erste Gleichspannung U1 bereitgestellt.

Sowohl die erste als auch die zweite Gleichspannung U1, U2 werden jeweils einem DC/DC-Wandler 3 aus Figur 1 oder 2 zugeführt.

**Bezugszeichenliste**

| | |
|---|---|
| 1 | Spliteinrichtung |
| 2 | Logikeinheit |
| 3 | DC/DC-Wandler |
| 4 | Netzteil |
| 5 | Energiespeicher |
| 6 | galvanische Trennung |
| A, B | Schalterstellung |
| A1, A2 | Anschluss |
| U1, U2 | Gleichspannung |
| U, U' | Spannung |
| U1', U2' | Hilfsspannung |
| Rx, Tx | Adernpaar |
| S1 | Statussignal |
| SH, SL | Signal |
| SW | Schalter |
| SP | Sperrwandler |
| SL, SH | Signal |
| T1, T2 | Transistor |
| V | Spannungsvergleicher |

## Patentansprüche

1. Spannungsversorgungsanordnung für ein Endgerät mit Ethernet-Energieversorgung aufweisend:
- eine Spliteinrichtung (1) mit einem Ethernet-Energieversorgungsanschluss (A1) zum Verbinden mit einem Ethernet-Kabel, das zur Energieversorgung eingerichtet ist, und mit einem Ausgang zum Bereitstellen einer ersten Gleichspannung (U1),
- eine mit der Spliteinrichtung (1) gekoppelte Logikeinheit (2),
- einen mit der Logikeinheit (2) gekoppelten und schaltbar mit dem Ausgang der Spliteinrichtung (1) verbundenen DC/DC-Wandler (3), und
- ein mit der Logikeinheit (2) gekoppeltes Netzteil (4) mit einem Ausgang zum Bereitstellen einer zweiten Gleichspannung (U2), der schaltbar mit dem DC/DC-Wandler (3) verbunden ist,
wobei an einem Ausgang des DC/DC-Wandlers (3) gesteuert von der Logikeinheit (2) eine Spannung (U) zur Versorgung des Endgeräts bereitgestellt ist.

2. Spannungsversorgungsanordnung nach Anspruch 1,
wobei die Spannungsversorgungsanordnung gesteuert von der Logikeinheit (2) in Funktion eines jeweiligen Werts der ersten und zweiten Gleichspannung (U1, U2) zum Betrieb in einer ersten Betriebsart und in einer zweiten Betriebsart ausgelegt ist.

3. Spannungsversorgungsanordnung nach Anspruch 2,
wobei
- in der ersten Betriebsart dem DC/DC-Wandler (3) die erste Gleichspannung (U1) zugeführt ist und die Spannung (U) in Abhängigkeit der ersten Gleichspannung. (U1) bereitgestellt ist und
- in der zweiten Betriebsart dem DC/DC-Wandler (3) die zweite Gleichspannung (U2) zugeführt ist und die Spannung (U) in Abhängigkeit der zweiten Gleichspannung (U2) bereitgestellt ist.

4. Spannungsversorgungsanordnung nach einem der Ansprüche 1 bis 3,
wobei jeweils eine galvanische Trennung (6) zwischen Spliteinrichtung (1) und DC/DC-Wandler (3) und zwischen Netzteil (4) und DC/DC-Wandler (3) vorgesehen sind.

5. Spannungsversorgungsanordnung nach einem der Ansprüche 1 bis 4,
wobei die Logikeinheit (2) einen Spannungsvergleicher (V) aufweist.

6. Spannungsversorgungsanordnung nach einem der Ansprüche 1 bis 5,
weiter aufweisend einen Energiespeicher (5), der schaltbar zwischen Spliteinrichtung (1) und DC/DC-Wandler (3) gekoppelt ist.

7. Spannungsversorgungsanordnung nach Anspruch 6,
wobei die Spannungsversorgungsanordnung gesteuert von der Logikeinheit zum Betrieb in einer dritten und in einer vierten Betriebsart ausgelegt ist.

8. Spannungsversorgungsanordnung nach Anspruch 7,
wobei
- in der dritten Betriebsart der Energiespeicher (5) zum Aufladen mit der ersten Gleichspannung (U1) mit dem Ausgang der Spliteinrichtung (1) verbunden ist und
- in der vierten Betriebsart der Energiespeicher (5) zum Bereitstellen einer Zusatzspannung (U') mit dem Eingang des DC/DC-Wandlers (3) verbunden ist.

9. Spannungsversorgungsanordnung nach einem der Ansprüche 1 bis 8,
wobei an einem Ausgang der Logikeinheit (2) ein Statussignal (S1) in Abhängigkeit der Spannung (U) bereitgestellt ist.

## Claims

1. Power supply assembly for a terminal device having Ethernet energy supply, having:
- a split device (1) with an Ethernet energy supply connection (A1) for connection to an Ethernet cable which is set up to supply energy and with an output for providing a first DC voltage (U1),
- a logic unit (2) which is coupled to the split device (1),
- a DC/DC converter (3) which is coupled to the logic unit (2) and is connected to the output of the split device (1) in a switchable manner, and
- a power supply unit (4) which is coupled to the logic unit (2) and has an output for providing a second DC voltage (U2), which output is connected to the DC/DC converter (3) in a switchable manner,
wherein a voltage (U) for supplying the terminal device is provided at an output of the DC/DC converter (3) under the control of the logic unit (2).

2. Power supply assembly according to Claim 1,
the power supply assembly being designed for operation in a first operating mode and in a second operating mode under the control of the logic unit (2) as a function of a respective value of the first and second DC voltages (U1, U2).

3. Power supply assembly according to Claim 2,
- the first DC voltage (U1) being supplied to the DC/DC converter (3) in the first operating mode and the voltage (U) being provided on the basis of the first DC voltage (U1), and
- the second DC voltage (U2) being supplied to the DC/DC converter (3) in the second operating mode and the voltage (U) being provided on the basis of the second DC voltage (U2).

4. Power supply assembly according to one of Claims 1 to 3, DC isolation (6) respectively being provided between the split device (1) and the DC/DC converter (3) and between the power supply unit (4) and the DC/DC converter (3).

5. Power supply assembly according to one of Claims 1 to 4, the logic unit (2) having a voltage comparator (V).

6. Power supply assembly according to one of Claims 1 to 5, also having an energy store (5) which is coupled between the split device (1) and the DC/DC converter (3) in a switchable manner.

7. Power supply assembly according to Claim 6,
the power supply assembly being designed for operation in a third operating mode and in a fourth operating mode under the control of the logic unit.

8. Power supply assembly according to Claim 7,
- the energy store (5) being connected to the output of the split device (1) in the third operating mode in order to be charged with the first DC voltage (U1), and
- the energy store (5) being connected to the input of the DC/DC converter (3) in the fourth operating mode in order to provide an additional voltage (U').

9. Power supply assembly according to one of Claims 1 to 8, a status signal (S1) being provided at an output of the logic unit (2) on the basis of the voltage (U).

## Revendications

1. Arrangement d'alimentation électrique pour un terminal muni d'une alimentation en énergie Ethernet, présentant :
- un dispositif de séparation (1) muni d'une borne d'alimentation en énergie Ethernet (A1) à relier avec un câble Ethernet qui est conçu pour l'alimentation en énergie, et muni d'une sortie pour délivrer une première tension continue (U1),
- une unité logique (2) connectée avec le dispositif de séparation (1),
- un convertisseur CC/CC (3) connecté avec l'unité logique (2) et relié de manière commutable avec la sortie du dispositif de séparation (1), et
- un bloc secteur (4) connecté avec l'unité logique (2), muni d'une sortie pour délivrer une deuxième tension continue (U2), laquelle est reliée de manière commutable avec le convertisseur CC/CC (3),
une tension (U) commandée par l'unité logique (2) destinée à l'alimentation du terminal étant délivrée à une sortie du convertisseur CC/CC (3).

2. Arrangement d'alimentation électrique selon la revendication 1, avec lequel l'arrangement d'alimentation électrique, commandé par l'unité logique (2) en fonction d'une valeur respective de la première et de la deuxième tension continue (U1, U2), est conçu pour fonctionner dans un premier mode de fonctionnement et dans un deuxième mode de fonctionnement.

3. Arrangement d'alimentation électrique selon la revendication 2, avec lequel
- dans le premier mode de fonctionnement, la première tension continue (U1) est acheminée au convertisseur CC/CC (3) et la tension (U) est délivrée en fonction de la première tension continue (U1) et
- dans le deuxième mode de fonctionnement, la deuxième tension continue (U2) est acheminée au convertisseur CC/CC (3) et la tension (U) est délivrée en fonction de la deuxième tension continue (U2).

4. Arrangement d'alimentation électrique selon l'une des revendications 1 à 3, avec lequel une isolation galvanique (6) est à chaque fois prévue entre le dispositif de séparation (1) et le convertisseur CC/CC (3) et entre le bloc secteur (4) et le convertisseur CC/CC (3).

5. Arrangement d'alimentation électrique selon l'une des revendications 1 à 4, avec lequel l'unité logique (2) présente un comparateur de tension (V).

6. Arrangement d'alimentation électrique selon l'une des revendications 1 à 5, présentant en outre un accumulateur d'énergie (5) qui est connecté de manière commutable entre le dispositif de séparation (1) et le convertisseur CC/CC (3).

7. Arrangement d'alimentation électrique selon la revendication 6, avec lequel l'arrangement d'alimentation électrique, commandé par l'unité logique, est conçu pour fonctionner dans un troisième et dans un quatrième mode de fonctionnement.

8. Arrangement d'alimentation électrique selon la revendication 7, avec lequel
- dans le troisième mode de fonctionnement, l'accumulateur d'énergie (5) est relié avec la sortie du dispositif de séparation (1) pour être chargé avec la première tension continue (U1) et
- dans le quatrième mode de fonctionnement, l'accumulateur d'énergie (5) est relié avec l'entrée du convertisseur CC/CC (3) pour délivrer une tension supplémentaire (U').

9. Arrangement d'alimentation électrique selon l'une des revendications 1 à 8, avec lequel un signal d'état (S1) est délivré à une sortie de l'unité logique (2) en fonction de la tension (U).
